Europäisches Patentamt

European Patent Office

Office européen des brevets

(19)

(11) Publication number: **0 432 778 A2**

## (12) EUROPEAN PATENT APPLICATION

(21) Application number: **90124115.8**

(22) Date of filing: **13.12.90**

(51) Int. Cl.⁵: **B01D 53/34**

(30) Priority: **15.12.89 JP 323821/89**

(43) Date of publication of application:
**19.06.91 Bulletin 91/25**

(84) Designated Contracting States:
**CH DE DK FR LI**

(71) Applicant: **NKK CORPORATION**
**1-2 Marunouchi 1-chome, Chiyoda-ku**
**Tokyo(JP)**

(72) Inventor: **Yamagishi, Miki, c/o Patent &**
**License Dept.**
**NKK Corporation, 1-2, 1-chome**
**Marunouchi, Chiyoda-ku, Tokyo(JP)**
Inventor: **Miyachi, Tuneharu, c/o Patent &**
**License Dept.**
**NKK Corporation, 1-2, 1-chome**
Marunouchi, Chiyoda-ku, Tokyo(JP)
Inventor: **Nara, Hisao, c/o Patent & License**
**Dept.**
**NKK Corporation, 1-2, 1-chome**
Marunouchi, Chiyoda-ku, Tokyo(JP)
Inventor: **Sakai, Masao, c/o Patent & License**
**Dept.**
**NKK Corporation, 1-2, 1-chome**
Marunouchi, Chiyoda-ku, Tokyo(JP)
Inventor: **Nakao, Tsuyoshi, c/o Patent &**
**License Dept.**
**NKK Corporation, 1-2, 1-chome**
Marunouchi, Chiyoda-ku, Tokyo(JP)

(74) Representative: **MEISSNER, BOLTE &**
**PARTNER**
**Widenmayerstrasse 48 Postfach 860624**
**W-8000 München 86(DE)**

(54) **Slurry supply device.**

(57) A slurry supply device comprises a slurry circulation pipe having a slurry feeding pipe (4) for feeding slurry into a head tank (6) from a slurry tank (1) via a pump (3), and a return pipe (7) for returning slurry to said slurry tank (1) from said head tank (6), a slurry supply pipe (8), which diverges from said slurry feeding pipe (4) and which supplies slurry to a slurry sprayer (11) of a reactor (10) for removing harmful gas, and a slurry flow controller (9), which is provided in said slurry supply pipe (8).

F I G. 1

## SLURRY SUPPLY DEVICE

The present invention relates to a slurry supply device, which stably supplies slurry to a reactor where harmful components, contained in combustion exhaust gas introduced from an incinerator, are removed by means of reaction with the slurry.

In this kind of the reactor, slurry is sprayed into combustion exhaust gas, which is introduced into the reactor, by a sprayer, and the sprayed slurry and combustion exhaust gas react with each other, thereby removing harmful components from the combustion exhaust gas.

In this case, in order to stably remove the harmful components, it is required that slurry be stably supplied to the sprayer.

However, there are cases where the slurry accumulates in the inner surface of the supply pipe and the pipe becomes blocked with slurry. In addition, for example when slurry is supplied by a reciprocating pump, the flow of slurry in the pipe is pulsated, so that slurry cannot be stably sprayed. Moreover, slurry is agitated in a tank by an agitator, and large particles often reach the inlet of the pump, thereby exerting a large change on the flow of slurry. This large change in the flow of slurry not only exerts an unfavorable influence on spraying, but also damages high-speed rotation disc type spraying devices.

An object of the present invention is to provide a slurry supply device which can stably supply slurry without choking up pipes and without changing the amount of spray.

The slurry supply device of the present invention comprises a slurry circulation pipe having a slurry feeding pipe for feeding slurry into a head tank from a slurry tank via a pump, and a return pipe for returning slurry to said slurry tank from said head tank; a slurry supply pipe, which diverges from said slurry feeding pipe and which supplies slurry to a slurry sprayer of a reactor for removing harmful gas; and a slurry flow controller, which is provided in said slurry supply pipe.

A high speed rotation disc type sprayer or a two fluid type sprayer is used to spray the slurry.

Then, an amount of slurry which is more than that to be supplied to the sprayer is fed to the slurry feeding pipe, and the flow rate of slurry in the pipe is increased, thereby preventing the pipe from being blocked by slurry. Thereafter, excess slurry is returned to the slurry tank from the head tank.

Slurry is supplied to the slurry supply pipe from the diverging point of the slurry feeding pipe by means of head pressure, which is kept constant from the diverging point to the top portion of the slurry feeding pipe to the head tank. Thereby, the flow rate controller can stably control the flow rate with little disturbance.

As mentioned above, slurry is stably supplied to the sprayer, whereby harmful components can be efficiently and stably removed from exhaust gas. Moreover, damage to the sprayer can be prevented.

This invention can be more fully understood from the following detailed description when taken in conjunction with the accompanying drawings, in which:

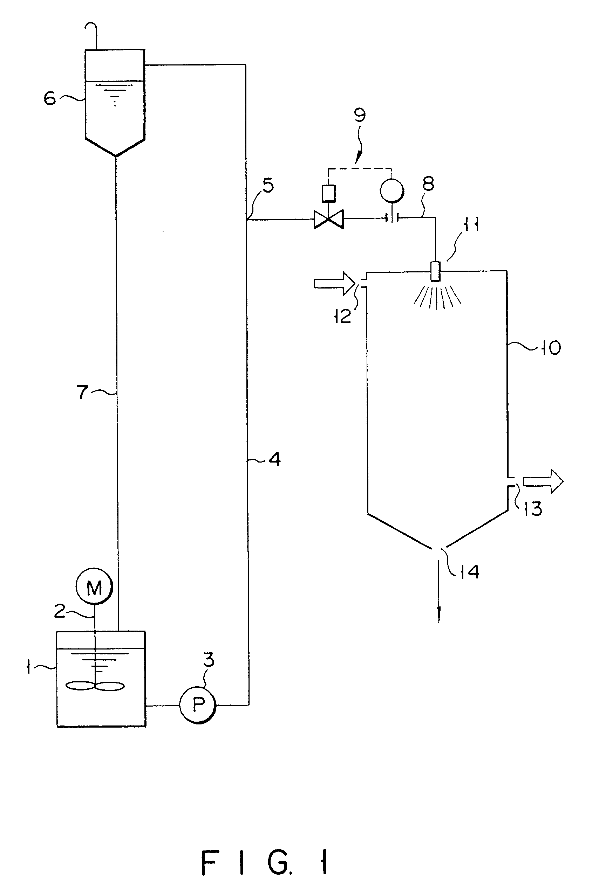

Fig. 1 is a view showing one embodiment of the present invention;

Fig. 2 is a view explaining a high speed rotation disc type sprayer; and

Fig. 3 is a view explaining a two fluid type sprayer.

An embodiment of the present invention will be explained with reference to the drawings.

An agitator 2 is provided in a slurry tank 1 and agitated slurry is fed, via a feeding pipe 4 and by means of a pump 3, to a head tank 6 which is open to the air. Slurry is supplied to a sprayer 11, via a supply pipe 8, from a diverging point 5 of the feeding pipe 4. Then, excess slurry is returned to the slurry tank 1 from the head tank 6 via a returning pipe 7.

Reactor 10 includes an inlet 12 for introducing process exhaust gas and an outlet 13. Also, a slurry sprayer 11 is provided in the top portion of the reactor 10. Products generated by the reaction with slurry are removed through an outlet 14 which is formed in the lower end of the reactor 10, or a dust collector which is provided down stream of the reactor 10.

In the supply pipe 8, there is provided a flow rate controller 9. To detect the flow rate, an electromagnetic flowmeter, which is suitable for the measurement of slurry, is used. Moreover, a ball valve, which can be washed, is used as a control valve.

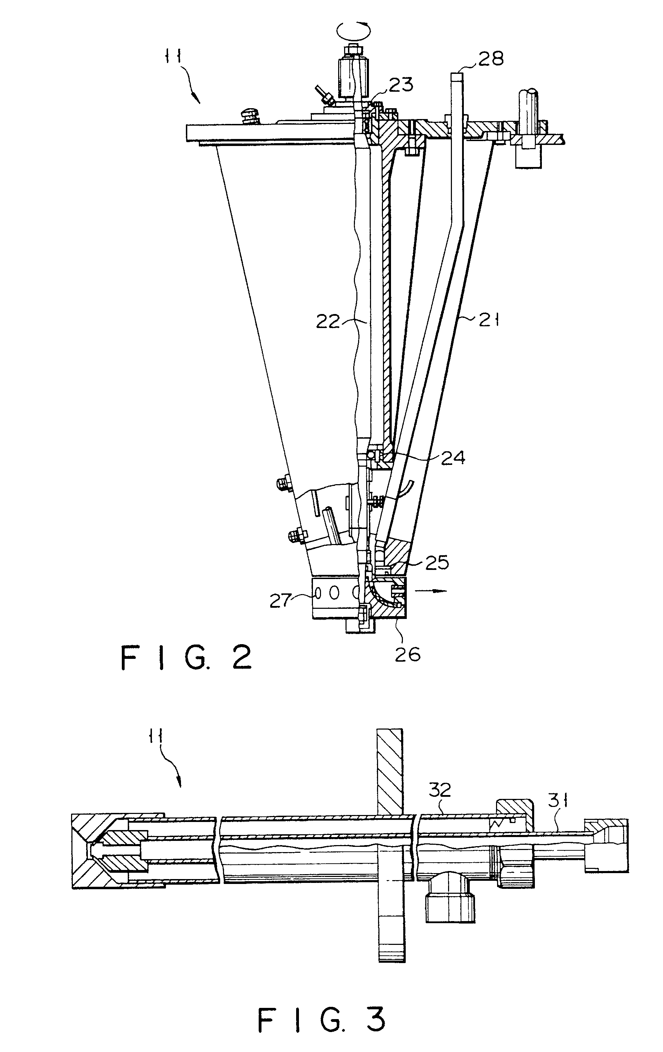

The high speed rotation disc type sprayer shown in Fig. 2 is used as the sprayer 11.

In a cone-shaped casing 21, there is provided a high speed rotation shaft 22 via bearings 23, 24 and 25. A rotation disc 26 is fixed to the lower end of the shaft 22 to have a small space between the lower end of the casing 21 and the rotation disc 26. A plurality of slurry injection outlets 27 are formed around the rotation disc 26.

By way of example, if the rotation disc 26 is rotated at a speed of 10,000 rpm, slurry, in the form of minute liquid drop supplied from the slurry supply tube 28, is evenly dispersed in the reactor 10.

However, if the flow rate of slurry changes and overflows the rotation disc 26 and slurry enters the bearing 25, the bearing 25 may be damaged.

To avoid the above problem, according to the present invention, the flow rate up to the diverging point 5 of the feeding pipe 4 becomes the sum of the flow rate to the supply pipe 8 and the flow rate to the head tank 6, the diameter of the pipe increases, and the flow speed increases, due to which clogging of the pipe with slurry is reduced. It is desirable that the amount of slurry to be fed from the pump 3 be more than twice the amount of slurry to be supplied to the supply pipe 8.

The top portion of the feeding pipe to the head tank 6 and the diverging point 5 is positioned in order that the head pressure of the slurry at the diverging point 5 is at least positive pressure when it reaches the sprayer 11 in consideration of pressure loss in the supply tube 8 including the flow rate controller 9. In this way, since slurry pressure to the supply pipe 8 can be kept constant as head pressure, the flow rate can be stably controlled.

Since the final end of the feeding tube 4 becomes an open end at the head tank 6, influence on the supply pipe 8 can be lessened even if the flow rate and slurry pressure are changed by the pulsating current at the pump 3.

For example, in a case where $Ca(OH)_2$ is used as slurry so as to remove harmful gases such as $HCl$, $SO_2$ contained in the exhaust gas, the following chemical reaction can be obtained:

$2Ca(OH)_2 + 2HCl$

$\rightarrow CaCl_2 \bullet Ca(OH)_2 \ H_2O + H_2O$

$2Ca(OH)_2 + 2SO_2 + O_2$

$\rightarrow 2CaSO_4 + 2H_2O$

The reaction product becomes dry fine particles and these particles fall through the outlet 14, whereafter such particles are suitably treated, or treated by the dust collector, which is provided down steam of the reactor.

The above embodiment explains the case in which a high speed rotation disc type sprayer is used as sprayer 11. However, a two-fluid type sprayer shown in Fig. 3 may also be used.

In this case, slurry is supplied from an inner tube 31 and high pressure air is fed from the portion between the inner tube 31 and an outer tube 32 and injected at the top end, whereby slurry supplied from the inner tube 31 is made minute. In this case, it is necessary for the slurry to be stably supplied to the sprayer in order for the sprayer to operate stably.

## Claims

1. A slurry supply device, comprising:
   a slurry circulation pipe having a slurry feeding pipe (4) for feeding slurry into a head tank (6) from a slurry tank (11) via a pump (3), and a return pipe (7) for returning slurry to said slurry tank (1) from said head tank (6);
   a slurry supply pipe (8), which diverges from said slurry feeding pipe (4) and which supplies slurry to a slurry sprayer (11) of a reactor (10) for removing harmful gas; and
   a slurry flow controller (9), which is provided in said slurry supply pipe (8).

2. A slurry supply device according to claim 1, characterized in that said slurry sprayer (11) is a high speed rotation disc type.

3. A slurry supply device according to claim 1, characterized in that said slurry sprayer (11) is a two fluid type.

F I G. 1

FIG. 2

FIG. 3